# EUROPEAN PATENT APPLICATION

(11) **EP 0 691 076 A1**
(43) Date of publication of application: **10.01.1996**
(21) Application number: 95107662.9
(22) Date of filing: 19.05.1995
(51) Int. Cl.: A01K 15/04, B60R 22/10, A01K 27/00

(54) **Pet anchor**

(30) Priority: 07.07.1994 JP 179580/94; 09.08.1994 JP 207959/94
(71) Applicant: Kabushikigaisha Heisei, Tokyo (JP)
(72) Inventor: Arakawa, Makoto, c/o Kabushikigaisha Heisei, Toshima-ku, Tokyo (JP)
(74) Representative: Schickedanz, Willi, Dipl.-Ing.

(57) **Abstract**

The invention relates to a pet anchor comprising at least one anchor band (3) one end (3a) of which is adapted to be anchored to a seat of vehicle or the like. Detachable means (2) are connected to the other end of said anchor band (3) and adapted to be engaged with a proximal end (7b) of a traction band (7) for a pet. The detachable means include an anchor plate (2) which comprises at least one upper slot (2d) and one lower recess (2a). The recess (2a) is provided with an opening (2b) for inserting an end (7b) of the traction band (7).

## Description

The invention relates to a pet anchor according to the preamble of claim 1.

Dogs and other pets, e. g. monkeys, must often be kept on a lead, whereby the lead is connected to a collar. However, such a leading is only sufficient where a man takes a walk with his pet. If the pet is to be anchored to a seat of a vehicle or the like a simple collar and lead combination will not suffice.

Recently, body bands for pets have been proposed which provide a better and more secure connection between a lead and pet (German Patent No. 42 35 782, Fig. 6). When taking a pet into a vehicle, the end of the lead can be tied to a supporting means of a headrest or the like so that the pet is anchored with the vehicle.

It is, however, very difficult to connect the end of the lead to the supporting means of the headrest, and a forearm of a dog can often be easily freed from a body strap, or a knot of the lead or traction band can be loosened when the dog moves backward or goes wild. Accordingly, the driving operation of the vehicle is often disturbed by the freed dog, or the dog will jump out from the vehicle when the door of the vehicle is opened.

It is, therefore, a problem of the present invention to provide a pet anchor for safely anchoring dogs, monkeys or the like to a seat of a vehicle.

This problem is solved by the features of claim 1.

It is an advantage of the invention that the looped portion of a lead or traction band can easily be detached from the anchor means of the seat of a vehicle.

Embodiments of the invention will now be described in connection with the accompanying figures.
- Fig. 1: is a perspective view showing a first embodiment of the present invention;
- Fig. 2: is a plan view of an anchor plate of the first embodiment of the present invention;
- Fig. 3: is a perspective view showing a body strap means used in the first embodiment of the present invention;
- Fig. 4: is a perspective view showing a condition in use of the first embodiment of the present invention;
- Fig. 5: is an explanatory view showing the way of use of the anchor plate shown in Fig. 2;
- Fig. 6: is an explanatory view showing the way of use of the anchor plate shown in Fig. 2;
- Fig. 7: is an explanatory view showing the way of use of the anchor plate shown in Fig. 2;
- Fig. 8: is a perspective view showing a condition in use of the body band means of Fig. 3;
- Fig. 9: is a plan view of an anchor plate of a second embodiment of the present invention;
- Fig. 10: is a plan view of an anchor plate of a third embodiment of the present invention;
- Fig. 11: is a plan view of an anchor plate of a fourth embodiment of the present invention;
- Fig. 12: is a perspective view of a fifth embodiment of the present invention;
- Fig. 13: is a perspective view of a sixth embodiment of the present invention;
- Fig. 14: is a perspective view of a seventh embodiment of the present invention.

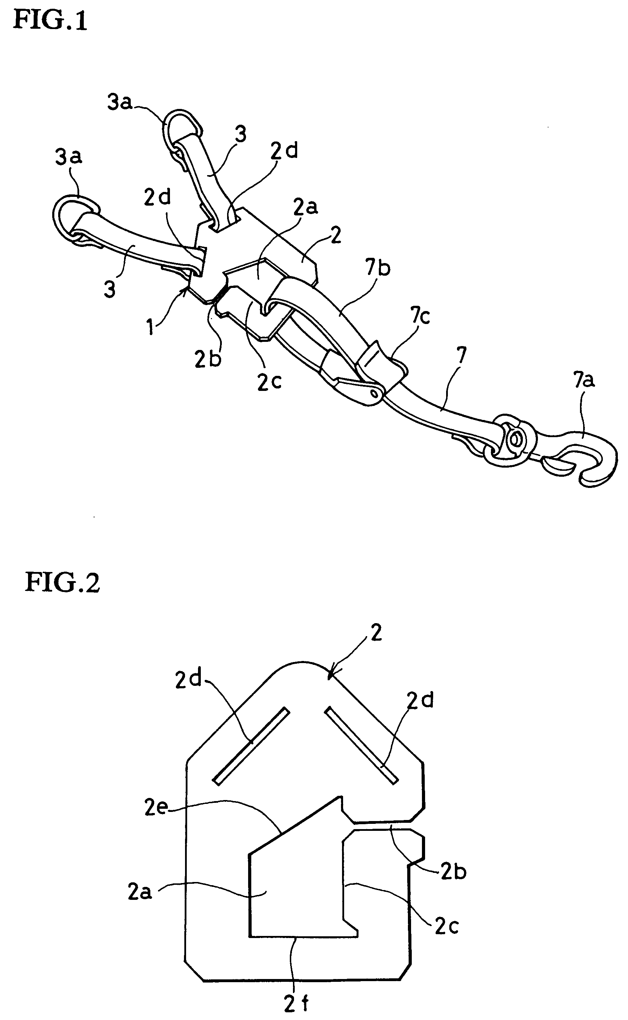

A first embodiment of the present invention will be hereinafter described with reference to Figs. 1 through 8.

A numeral 1 generally denotes an anchor means comprising an anchor plate 2 and two anchor bands 3 formed of long braid of Nylon or the like. The anchor plate 2 is made of metal or plastic plate and has a substantially "C" shaped configuration having an engaging recess 2a formed at the center thereof., a slit 2b formed in one side of the anchor plate 2 surrounding the engaging recess 2a, an overhang portion projecting inwardly within the engaging recess 2a, and a pair of slots 2d formed in an inverted "V" shaped configuration at an upper side of the anchor plate 2. Each free end (proximal end) of the anchor bands 3 is provided with an anchor ring 3a.

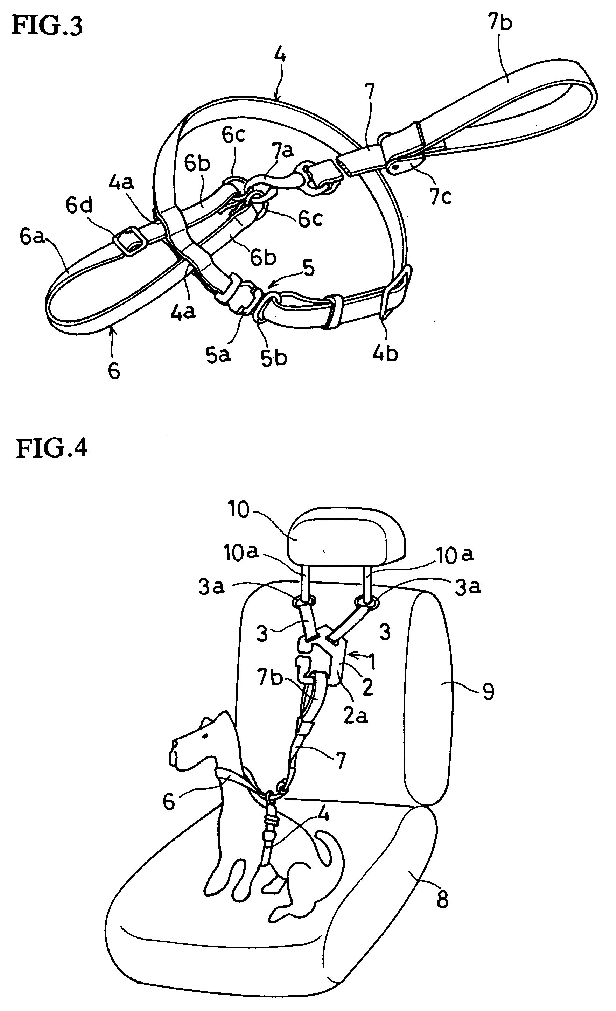

One example of a body strap means 4 suitable for use with the anchor means 1 is shown in Fig. 3.

That is, a numeral 4 denotes a body strap formed of long braid of Nylon or the like and provided with two flat through-holes 4a formed at an upper portion thereof by welding overlapped braids with each other. The body strap 4 is further provided at a side portion thereof with connecting members 5 comprising an engaging projection 5a mounted on one end of the body strap 4 and its receptacle 5b mounted on the other end thereof. The connecting members 5 are connected with each other by spring pieces (not shown) arranged at both sides of the projection 5a expanded within the receptacle 5b by inserting the engaging projection 5a into the receptacle 5b.

A numeral 6 denotes a front strap formed of long braid of Nylon or the like. The front strap 6 is bent in a "U" shaped configuration to form a neck ring portion 6a and a pair of traction portions 6b which is passed through said through-holes 4a formed in the body strap 4 and is provided with a connecting ring 6c at its proximal end.

A numeral 7 denotes a traction band. The traction band 7 is provided with a connector 7a at a distal end thereof and forms a loop shaped portion 7b at a proximal end thereof. An adjuster 7c is mounted on the loop shaped portion 7b for adjusting the length thereof. Similarly, numerals 4b and 6d denote adjusters for adjusting the length of said body strap 4 and front strap 6, respectively.

A method for using the pet anchor of the above mentioned embodiment will now be described with reference to Fig. 4.

Firstly, after having pulled out a headrest 10 from its supporting holes formed in a backrest 9 of a seat of vehicle, supporting pipes 10a of the headrest 10 are passed through the anchor rings 3a and then are returned into respective supporting holes in the backrest 9.

On the other hand, after having adjusted the length of the front strap 6 and the body strap 4 so that they fit to a body size of a dog by using their adjusters 6d and 4b, the neck ring portion 6a is put on the neck of dog as well as the body strap 4 is applied around the body of dog and is closed by inserting the engaging projection 5a into the receptacles 5b. Then the connecting rings 6c are hooked by the connector 7a. Finally, the loop shaped portion 7b of the traction band 7 is inserted into the engaging recess 2a through the slit 2b of the anchor plate 2.

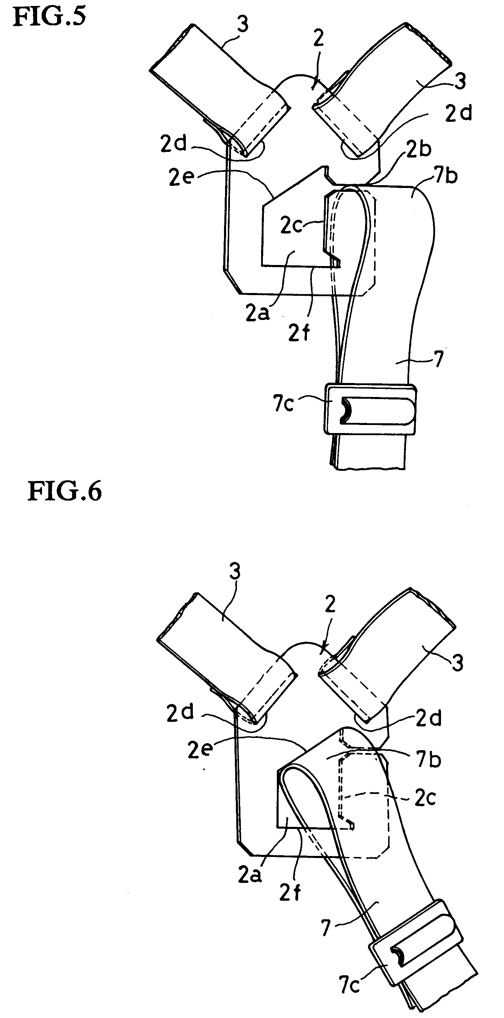

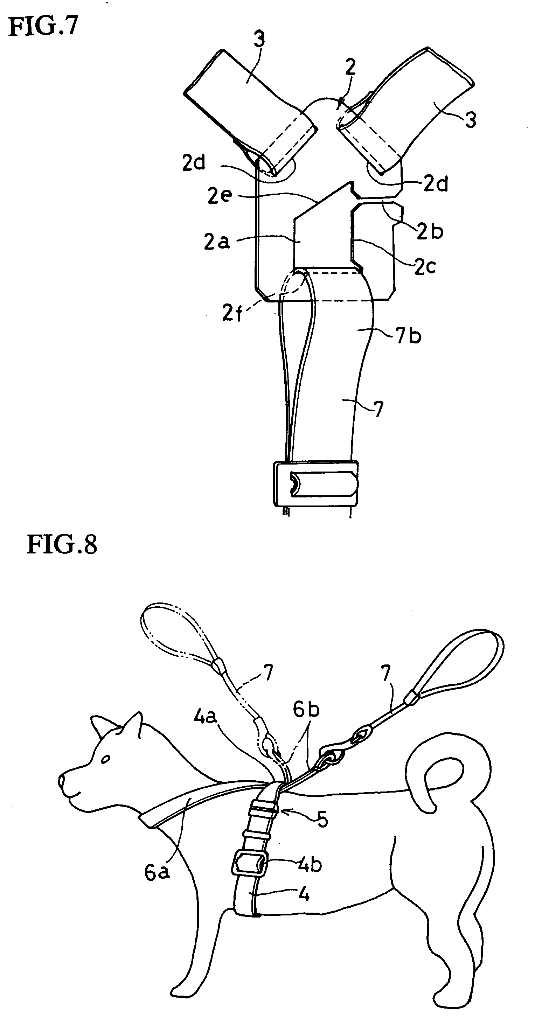

The mechanism of the insertion of the traction band 7 into the engaging recess 2a will be described more in detail with reference to Figs. 5 through 7. The loop shaped portion 7b of the traction band 7 is inserted through the slit 2b of the anchor plate 2 (Fig. 5), is then advanced into the engaging recess 2a until the traction band 7 abuts against the upper inclined edge 2e (Fig. 6), and is finally pulled down until the traction band 7 abuts on the bottom edge 2f (Fig. 7).

The traction band 7 once abutted on the bottom edge 2f cannot float therefrom by itself due to the presence of the overhang portion 2c. Even though the traction band 7 would clear the overhang portion 2c and float from the bottom edge 2f due to any reason, coming out of the traction band 7 of itself through the slit 2b is very difficult since the traction band 7 floated from the bottom edge 2f occupies a condition abutted against the upper inclined edge 2e.

This makes it possible to keep a dog anchored to the seat of vehicle since the loop shaped portion 7b is prevented from coming out of the engaging recess 2a by the overhang portion 2c.

The dog is caught at its neck and chest by the neck ring portion 6a of the front strap 6 and the body strap 4 respectively as shown in Fig. 8. Thus the neck ring portion 6a can be pulled backward as shown by an arrow in Fig. 8 by the traction band 7 via the traction portion 6b. Accordingly, the neck of dog is tightened and simultaneously bent upward toward the supporting points (i. e. through-holes 4a) of the body strap 4 when the dog would go wild and move backward within the cabin of vehicle. This action of the traction portion 6b suppresses the motion of the dog and thus prevents disturbance of driving operation of vehicle or the jumping out of dog from the vehicle when the door of vehicle is opened.

The traction band 7 can be detached from the anchor plate 2 by carrying out reversely the mounting operation of the traction band 7 to the anchor plate 2 described with reference to Figs. 5 through 7.

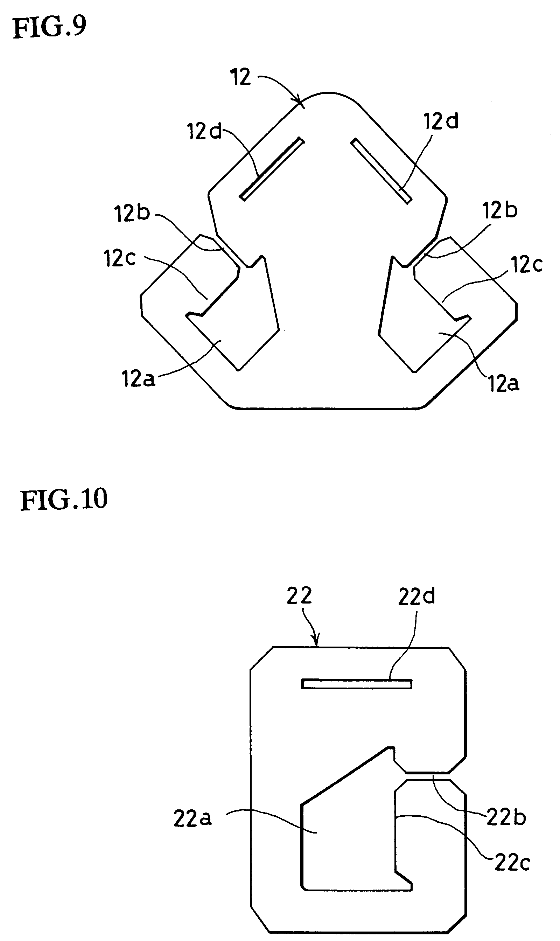

Fig. 9 illustrates a second embodiment of an anchor plate 12 of the present invention. In this embodiment, a pair of slots 12d of inverted "V" shaped configuration is formed similarly with the embodiment shown in Fig. 2. However, it differs from the embodiment of Fig. 2 in that two engaging recesses 12a are formed in the anchor plate 12 in a back to back relation and thus can be used for two dogs simultaneously.

Fig. 10 illustrates a third embodiment of an anchor plate 22 of the present invention. In this embodiment, horizontally formed in the anchor plate 22 is only one slot 22d to which one end of one anchor band 3 is connected. This anchor plate 22 is intended to be anchored to one supporting pipe 10a of the headrest 10 by inserting the one supporting pipe 10a into an anchor ring 3a mounted on the other end of the anchor band 3.

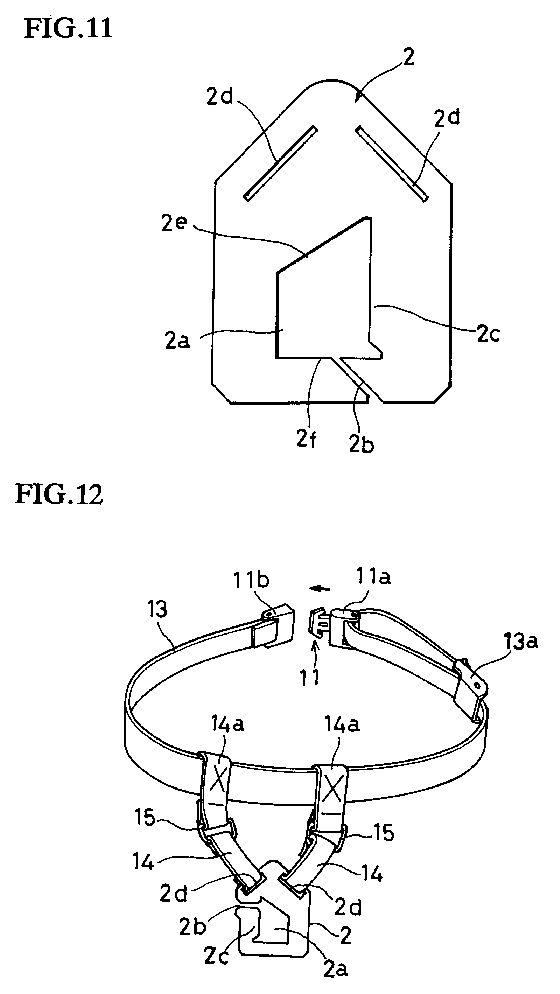

Fig. 11 illustrates a fourth embodiment of an anchor plate 2 of the present invention. In this embodiment, a slit 2b is not formed in the lateral side and is formed in the bottom side of the anchor plate 2. The loop shaped portion 7b of the traction band 7 is inserted into the engaging recess 2a through said slit 2b and is engaged with the bottom edge 2f.

The slits 12b and 22b in the anchor plates 12 and 22 shown in Figs. 9 and 10 may be formed in their bottom side similarly with the embodiment of Fig. 11.

Fig. 12 illustrates a fifth embodiment of the present invention. In this embodiment, the anchor means 1 comprises an embracing band 13 formed of braid of Nylon or the like having an engaging projection 11a at one end thereof, a receptacle at the other end thereof, and a length adjuster 13a at a medium portion thereof; an anchor plate 2; and a pair of anchor bands 14 formed of braid of Nylon or the like each having one end passed through the slot 2d and connected thereto and the other end formed as a loop shaped portion 14a through which the embracing band 13 is passed. This anchor means 1 can anchor a dog to the seat 8 by fastening the embracing band 13 around the backrest 9 even though the headrest is formed integrally with the backrest 9.

A numeral 15 denotes connecting rings each arranged at a medium of each anchor band 14.

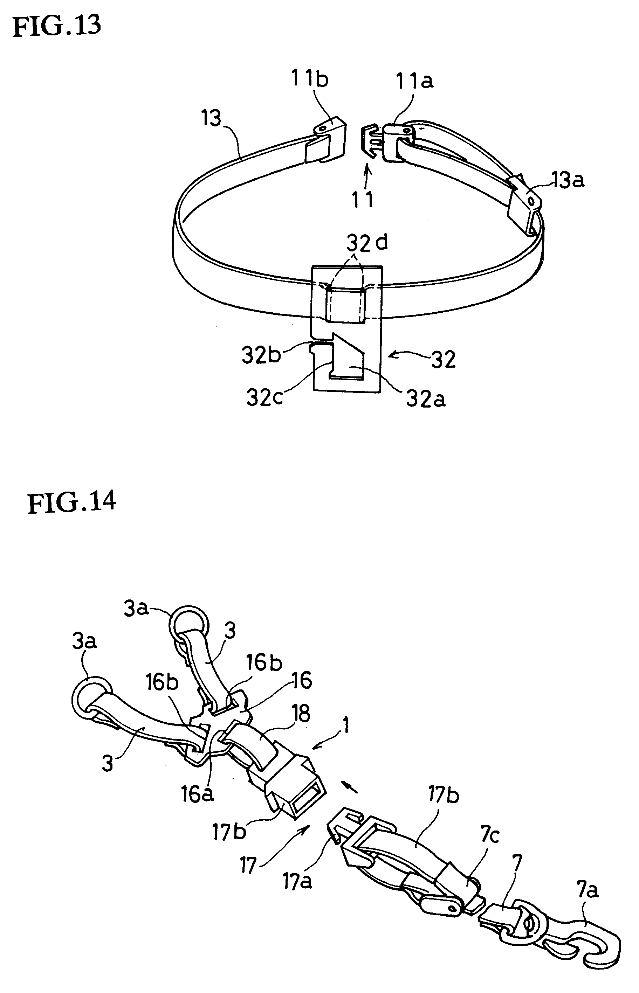

Fig. 13 illustrates a sixth embodiment of the present invention which is a simplified one of the fifth embodiment. In this embodiment, an anchor plate 32 is directly mounted on the embracing band 13 by passing the embracing band 13 through slots 32d formed vertically and parallel with each other in the upper portion of the anchor plate 32.

Fig. 14 illustrates a seventh embodiment of the present invention. This anchor means 1 comprises a connecting plate 16 of substantially elliptical configuration in which a first slot 16a is formed at a lower center portion thereof and a pair of second slots formed in an inverted "V" shaped configuration at an upper portion thereof; a connecting band 18 formed of braid of Nylon or the like, one end of which is passed through the first slot 16a and the other end of which is provided with a receptacle 17b of connecting members 17; and a traction band 7 having a loop shaped portion 7b to which an engaging projection 17a is connected. Similarly with the first embodiment, the anchor means 1 of this embodiment is anchored to the seat 8 of a vehicle by passing supporting pipes 10a of the headrest 10 through the anchor rings 3a each mounted on one end of each anchor band 3. The connection of the traction band 7 to the anchor means 1 is carried out by inserting the engaging projection 17a into the receptacle 17b.

According to this embodiment, the dog can be easily anchored to the anchor means 1 and detached therefrom by operating the engaging projection 17a and the receptacle 17b of the connecting members 17. Although the engaging projection 17a is mounted on the traction band 7 and the receptacle 17b is mounted on the anchor means 1 in the example shown in Fig. 14, the projection 17a and the receptacle 17b may be arranged in a reverse relation.

## Claims

1. Pet anchor comprising at least one anchor band (3) one end (3a) of which is adapted to be anchored to a seat of vehicle or the like, and a detachable means (2) connected to the other end of said anchor band (3) and adapted to be engaged with a proximal end (7b) of a traction band (7) for a pet.

2. Pet anchor according to claim 1, **characterized in that** said detachable means comprises an anchor plate (2), said anchor plate (2) being provided with at least one slot through which the other end of said at least one anchor band (3) is passed and secured, said anchor plate (2) also comprising at least one engaging recess (2a) for a traction band (7).

3. Pet anchor according to claim 2, **characterized in that** the recess (2a) has a substantially "C" shaped configuration and is adapted to be engaged with a looped end (7b) of said traction band (7).

4. Pet anchor according to claim 2, **characterized in that** said anchor plate (2) is formed with a slit (2b) communicating with said engaging recess (2a) said slit (2b) having a width slightly larger than the thickness of said traction band (7).

5. Pet anchor according to claim 3, **characterized in that** a bottom edge (2f) of said engaging recess (2a) is formed such that it has a length slightly longer than the width of said traction band (7), and that an overhang portion (2c) projecting inwardly within said engaging recess (2a) is formed in one lateral side in which said slit (2b) is formed such that the width between an inner edge of said overhang portion (2c) and an inner edge of the other lateral side oppositely facing to said overhang portion (2c) is narrower than said traction band (7).

6. Pet anchor according to claims 3 and 4, **characterized in that** the length of said bottom edge (2f) of said engaging recess (2a) is formed such that it is slightly longer than the width of said traction band (7), and wherein said slit (2b) is formed in a bottom side of said engaging recess (2a) in a direction inclined thereto.

7. Pet anchor according to claim 5, **characterized in that** said engaging recess (2a) has an inclined upper edge (2e) inclining upwardly from a top of said other lateral side of said engaging recess toward a top of said one lateral side above said slit (2b).

8. Pet anchor according to claim 1**, characterized in that** said one end of said anchor band (3) is provided with an anchor ring (3a) into which a supporting pipe (10a) of a headrest (10) of said seat (8, 9) is inserted.

9. Pet anchor according to claim 1, **characterized in that** said one end of said anchor band (14) is connected to a loop shaped embracing band (13) for embracing said seat (9).

10. Pet anchor according to claim 1, **characterized in that** said anchor band is formed as a loop shaped embracing band (13) for embracing said seat (9), and that said loop shaped embracing band (13) is passed through said slots (32d) of said anchor plate (32).

11. Pet anchor according to claim 1, **characterized in that** said detachable means comprises connecting members (17) including an engaging projection (17a) and a receptacle (17b) for detachably receiving said engaging projection (17a), and wherein one of said engaging projection (17a) and said receptacle (17b) is attached to said other end of said anchor band (3) and the other thereof is attached to said proximal end of said traction band (7).

12. Pet anchor according to claim 1, **characterized in that** the distal end of said traction band (7) is adapted to be connected to the proximal ends of the traction portions (6b) of a front strap, said front band forming a neck ring portion (6a) to be put on a neck of dog and said traction portions (6b), said traction portions (6b) being passed through through-holes formed in an upper portion of a body strap (4) to be put on a body of dog.

13. Anchor plate for the use as an anchor means for anchoring a pet in a vehicle, **characterized in that** the anchor plate (2) comprises at least one upper slot (2d, 12d, 22a) and at least one lower recess (2a, 12a, 22a).

14. Anchor plate according to claim 13, **characterized in that** the lower recess (2a, 12a, 22a) comprises an opening (2b, 12b, 22b).
